Europäisches Patentamt

European Patent Office

Office européen des brevets

(11) Publication number: 0 240 093
A2

# EUROPEAN PATENT APPLICATION

(21) Application number: 87200883.4

(22) Date of filing: 03.05.85

(51) Int. Cl.³: **B 23 B 51/04**
B 23 B 41/00, B 25 B 11/00

(30) Priority: 04.05.84 NL 8401434

(43) Date of publication of application:
07.10.87 Bulletin 87/41

(84) Designated Contracting States:
AT BE CH DE FR GB IT LI LU NL SE

(60) Publication number of the earlier application
in accordance with Art. 76 EPC: 0 161 713

(71) Applicant: CondenSafe B.V.
Lemelerbergweg 37a
NL-1101 AH Amsterdam(NL)

(72) Inventor: Van Suchtelen, Marco
Geerdinkhof 147
NL-1103 PV Amsterdam(NL)

(72) Inventor: Veenendaal, Jan
Geerdinkhof 118
NL-1003 PT Amsterdam(NL)

(72) Inventor: Van Zaanen, Johan Jacob
Geerdinkhof 119
NL-1103 PT Amsterdam(NL)

(74) Representative: Kupecz, Arpad et al,
Octrooibureau Los en Stigter B.V. Postbox 20052
NL-1000 HB Amsterdam(NL)

(54) Drilling apparatus for drilling holes in glass sheets.

(57) In a drilling apparatus for drilling holes in glass sheets, with a housing and a drill spindle being journalled in that housing for an axial to and fro movement, said spindle at least at its free end being hollow and having an internal underpressure during the drilling operation and at its free end being connectable with a hollow drill of which the internal cavity is connected with the internal cavity of the drill spindle and that is lubricated and/or cooled by a fluid being supplied to the drilling apparatus under an overpressure, means are provided for radially driving the drill spindle by means of the supplied fluid. In one embodiment said means comprise a paddle wheel that is fixed on the drill spindle. Moreover, means can be provided for axially driving the drill spindle by means of the supplied fluid.

fig.1

EP 0 240 093 A2

Drilling apparatus for drilling holes in glass sheets

The invention relates to a drilling apparatus for drilling holes in glass sheets, with a housing and a drill spindle being journalled in that housing for an axial to and fro movement, said spindle at least at its free end being hollow and having an internal underpressure during the drilling operation and at its free end being connectable with a hollow drill of which the internal cavity is connected with the internal cavity of the drill spindle and that is lubricated and/or cooled by a fluid being supplied to the drilling apparatus under an overpressure.

A drilling apparatus of this type is already known from US patent application 2906256. This known drilling apparatus has a drill spindle that is axially movable to and fro in a static housing and that carries at its end a hollow drill. During a drilling action an external pump is connected with the hollow drill so that the glass sheet is sucked firmly against the edges of the hollow drill and the drilled-out glass sheet part remains in the hollow drill after the hole in the glass sheet has been completed. Moreover, a fluid is supplied through a conduit for lubricating and/or cooling the drill. Herefore this known apparatus uses an upstanding edge that projects from the surface of the glass sheet to be machined and around the drill.

It is an object of the invention to further improve the drilling apparatus of the type referred to above.

Therefore, the drilling apparatus according to the invention is characterized in that the drill spindle is positioned in a chamber that is formed in the housing and that is open at one side and that near to its free end is supported by a first bearing having good gas and fluid sealing properties wherein, on some distance of its free end, a sealing element is positioned between its contour wall and the internal wall of the chamber forming a first chamber section that is limited by the first bearing and the sealing element and that the drilling apparatus is provided with means for radially driving the drill spindle by means of the supplied fluid.

Driving the drill spindle in radial direction by means of the supplied fluid offers the advantage that the safety of the drilling apparatus is extremely high in contrast with for example electrically driven drilling apparatus. Moreover, in a handy way use is made then of the supplied fluid.

If in an embodiment of the drilling apparatus according to the invention the drill spindle is axially moveable to and fro by the supplied fluid, the safety of the drilling apparatus is still further increased wherein here too in a handy way use is made of the supplied fluid. Then the drilling apparatus can without objections be applied under moist conditions without creating dangerous situations. Especially when working with the drilling apparatus in the open air this is a great advantage.

The invention will hereafter be explained further with reference to the drawing showing an embodiment of the driling apparatus according to the invention.

Fig. 1 shows a schematical longitudinal section of a drilling apparatus according to the invention of which the conduits have been omitted for clearness' sake;

Fig. 2 shows a front view of the drilling apparatus of fig. 1;

Fig. 3 shows a combined cross sectional section of the drilling apparatus of fig. 1, namely the left half according to line IIIA-IIIA and the right half according to line IIIB-IIIB;

Fig. 4 shows a cross sectional section according to line IV-IV in fig. 1; and

Fig. 5 shows a schematic operational diagram of the drilling apparatus according to the invention.

The drilling apparatus 1 consists substantially of a housing 2 and a drill spindle 3 being journalled in the housing 2 for a to and fro movement. The drill spindle 3 has at its free end an internal cavity 4 being connected with the internal cavity 5 of a hollow drill 6 that can be coupled with the free end of the drill spindle 3.

With the aid of the hollow drill 6 during drilling a hole in the glass sheet a cylindrical glass portion is cut loose relative to the surrounding glass sheet. By applying an underpressure in the cavity 4 of the drill spindle 3 during the drilling operation the cut-loose glass portion will be held in the cavity 5 of the drill 6. Especially when drilling holes in double glass this in an important property because it is undesired that the cut-loose glass portion falls in the space between the two glass sheets.

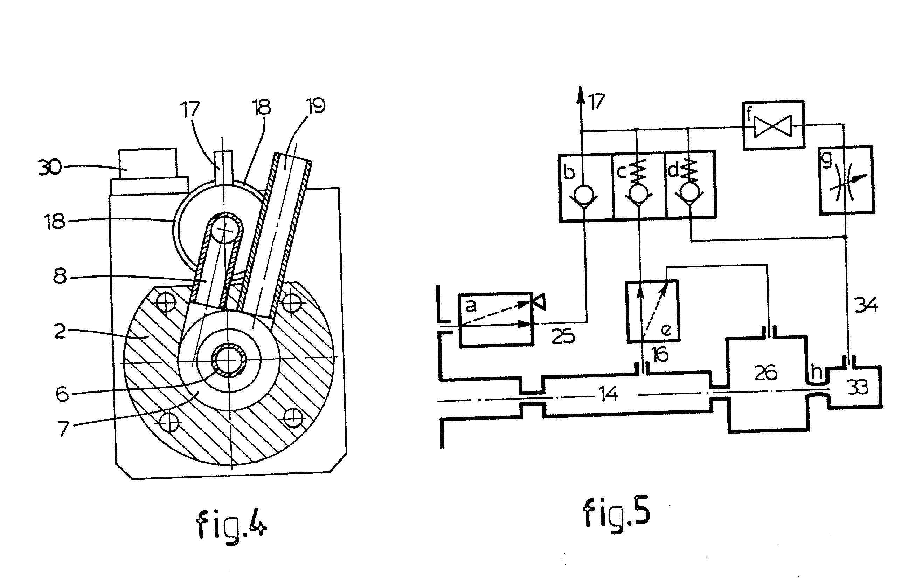

In the chamber 7 that is formed by the housing 2 and that is open at one side a lubricating and/or cooling fluid conduit 8 debouches near to the drill 6. The lubricating and/or cooling fluid supplied through this conduit 8 takes care for the lubrication and/or cooling of the drill 6 during the drilling operation. The discharge of the lubrication and/or cooling fluid takes place through a discharge conduit 9 that is positioned beside the conduit 8 and that is shown in fig. 4.

Near to its free end the drill spindle 3 is supported by a first bearing 10 wherein the surrounding wall 11 of the drill spindle 3 is axially slidable relative to this bearing. Some distance away from the free end of the drill spindle 3 a sealing element 13 is positioned between its surrounding wall 11 and the internal wall 12 of the chamber 7, said sealing element 13 having a fixed position relative to the chamber 7.

The first bearing 10 as well as the sealing element 13 have good gas and fluid sealing properties. Firstly a result of this is that the lubricating and/or cooling fluid that is led in the chamber through the conduit 8 cannot reach those sections of the chamber 7 that are positioned behind the first bearing 10. Secondly a first chamber section 14 is formed that is totally sealed relative to the other sections of the chamber 7. This makes it possible to apply the underpressure in the cavity 4 of the drill spindle 3 by applying an underpresuure in the first chamber section 14 and creating a connection between the first chamber section 14 and the cavity 4 of the drill spindle 3.

Therefore, the drill spindle is provided with two channels 15 debouching in the cavity 4 as well as in the first chamber section 14. The position of the channels 15 is such that it is always within the limits of the first chamber section 14 during the axial movement of the drill spindle 3.

It is possible to provide a closable opening in the housing 2, said opening in a certain axial and radial position of the drill spindle 3 being aligned with the channels 15. By applying a locking element that is pushed through the opening into the channels 15 the drill spindle can be locked against a radial rotation easing the mounting or dismounting of a drill 6 on the drill spindle 3.

Besides of the mentioned possibility of applying an underpressure in the first chamber section 14 also an overpressure can be applied in this chamber section 14. In this way a glass portion inside of the cavity 5 of the drill 6 will be expelled.

For applying the under or overpressure in the first chamber section 14 a suction or pressure conduit 16 debouches herein. This suction or pressure conduit 16 can be connected with the suction side 17 of a vacuum mpump 18.

This vacuum jet pump 18 is positioned in the conduit 8 of the lubricating and/or cooling fluid that is supplied under pressure to the vacuum jet pump 18. Thus, the lubricating and/or cooling fluid conduit 8 is connected with the fluid discharge side of the vacuum pump 18.

Instead of with the suction side 17 of the vacuum jet pump 18 the suction or pressure conduit 16 can also be connected with the conduit section 19 that is positioned upstream from the vacuum jet pump 18 and that therefore is provided with a coupling stub 20. Due to this an overpressure can be applied in the first chamber section, for example for expelling a glass portion out of the drill 6.

In the suction or pressure conduit 16 a not further shown three way valve is provided for selectably connecting the first chamber section 14 with the suction side 17 of the vacuum jet pump 18 or with the conduit section 19. Moreover, between the three way valve and the vacuum jet pump 18 there is provided a vacuum limiter for limiting the underpressure by two endless sealing means 23, 24 extending around the opening 22 of the chamber 7 and near to the outer edge of the flat plane 21, respectively. A suction channel 25 debouches in that portion of the flat plane that is positioned between these sealing means 23, 24. This suction channel 25 can be connected with the suction side 17 of the vacuum jet pump 18 so that it is possible to firmly lock the drilling apparatus 1 relative to the glass sheet to be machined. Because the opening 22 of the chamber 7 is not connected with the suction channel 25 when the drilling apparatus 1 is locked on a glass sheet, the locking will also be maintained after finishing the hole.

In the suction channel 25 a not further shown repercussion valve is provided that takes care for maintaining the underpressure at the flat plane 21. In the suction channel 25 also an adjustable vacuum interrupter has been placed for interrupting the underpressure when the drilling apparatus 1 has to be removed from the glass sheet.

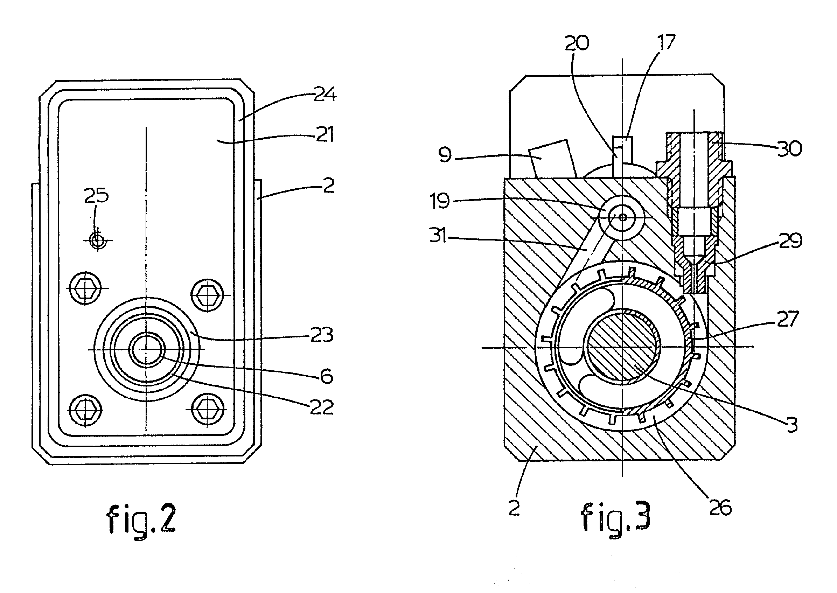

The chamber 7 has a second chamber 26 that is formed at that side of the sealing element 13 that faces away from the opening 22. The drill spindle portion extending in the second chamber section 26 carries a paddle wheel 27 that is radially and axially not slidable connected therewith. In an opening 28 in the wall of the second chamber section 26 a spray-nozzle 29 (see fig. 3) is provided that debouches in the second chamber section 26 in such a way, that the elongation of the axis of the spray-nozzle 29 nearly touches the contour of the paddle wheel 27. As a result a good functioning turbine drive of the drill spindle 3 is obtained.

The width of the paddle wheel 27 is such that during the to and fro movement of the drill spindle 3 the spray-nozzle 29 is always positioned between the forward and backward limiting plane of the paddle wheel 27.

The spray-nozzle 29 can be connected with an external supply conduit of the high pressurized fluid by means of a coupling element 30. Besides of the opening 28 for the spray-nozzle 29 the second chamber sections 26 also comprises two openings for discharge channels 31. These discharge channels 31 that are not positioned in the same cross sectional plane as the spray-nozzle 29 but that in fig.

1 are positioned equidistantly at both sides of the spray-nozzle 29 form a connection between the second chamber section 26 and the conduit section 19. As a consequence the pressure with which the fluid is supplied to the spray-nozzle 29 has to be that high that after driving the drill spindle 3 through paddle wheel 27 the fluid flowing through the discharge channels 31 via the conduit section 19 through the vacuum jet pump 18 has still enough velocity to create an underpressure at the suction side 17 of the vacuum jet pump 18.

Besides of the driving function the fluid whirling in the second chamber section 26 before being discharged through the discharge channels 31 also has a damping effect on the radial drill spindle movement thereby avoiding extremely high rpm's.

At that side of the paddle wheel 27 facing away from the opening 22 of the chamber 7 the drill spindle 3 is journalled by a second bearing 32. This second bearing 32, in contrary to the first bearing 10, is penetratable by the fluid wherein the contour wall 11 of the drill spindle 3 is axially slidable relative to the second bearing 32.

In the third chamber section 33 that is limited by the second bearing 32 and the backside of the camber 7 a conduit 34 debouches that can be connected with the suction side 17 of the vacuum jet pump 18. In this conduit a not further shown pressure sensitive valve is positioned that is closed during the drilling operation and that is opened after completing the drilling operation wherein also in the conduit 34 a pressure limiter is provided limiting the maximum pressure in the third chamber section 33. Moreover, the conduit 34 contains a passage controll that can be used to control the flow velocity after opening the valve.

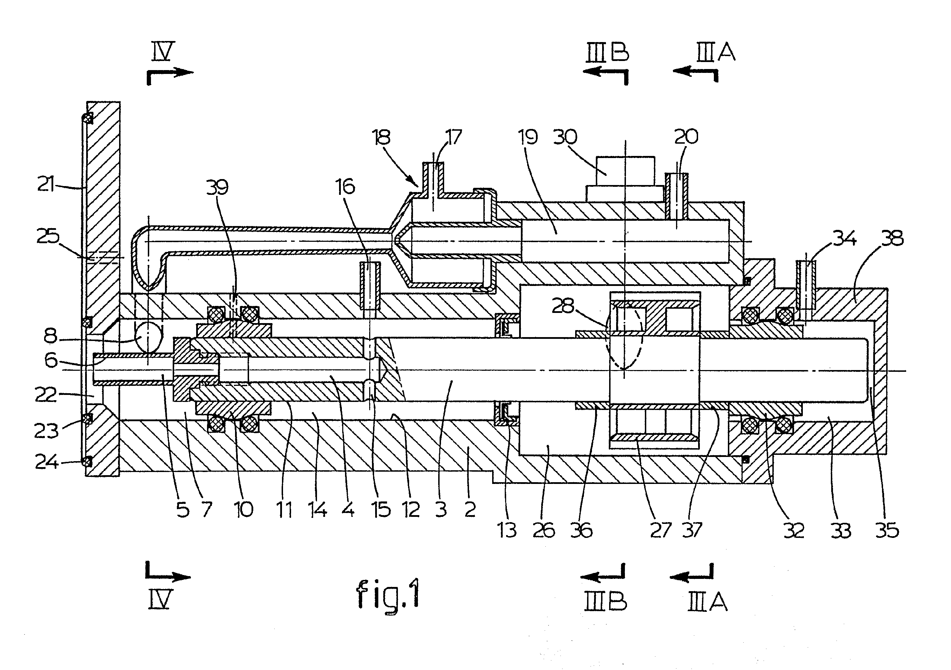

Because the second bearing can be penetrated by the fluid a part of the fluid being sprayed under high pressure in the second chamber section 26 through the spray-nozzle 29 will penetrate through the second bearing 32 into the third chamber section 33 and pressurize the backside 35 of the drill spindle 3. This pressure on the backside 35 of the drill spindle 3 will result in an axial movement of the drill spindle 3 (in fig. 1 to the left).

The pressure rise in the third chamber section 33 that is possible because the pressure sensitive valve in the conduit 34 being closed will occur gradually so that the movement of the drill spindle starts gradually and has no sudden character.

When the drilling operation has been completed and the hole in the glass sheet has been wholly formed the drill spindle will have some overshoot due to the pressure in the third chamber section 33 and the fall-off of the opposite pressure of the glass sheet on the drill spindle 3 and the inertia of the drill spindle 3 will cause an underpressure in the third chamber section 33. The pressure sensitive valve reacts on this pressure fall and will open thereby connecting the third chamber section 33 with the suction side 17 of the vacuum jet pump 18. As a result the drill spindle will be moved in the opposite direction (in fig. 1 to the right). The velocity of this movement depends on the position of the passage control positioned in the conduit 34.

The advantage of using such a pressure sensitive valve is, that the drill spindle 3 is moved back nearly instantly after completing the hole in the glass sheet without the need for a further operation.

At both sides of the paddle wheel 27 two abutment means 36, 37 are provided on the drill spindle 3, said means cooperating with the sealing element 13 and the second bearing 32, respectively, for limiting the axial movement of the drill spindle 3.

The part 38 of the housing 2 has been manufactured from a transparent material so that it is possible to follow the axial movement of the drill spindle 3 showing the moment on which a hole is completed.

The first bearing 10 is provided with a lubrication conduit 39 that debouches near to the bearing 10. This lubrication conduit 39 is connected with the second chamber section 26.

The operation of the drilling apparatus 1 will be explained hereafter with reference to the operational diagram of fig. 5.

During sucking of the drilling apparatus 1 on a glass sheet the vacuum disrupter e is closed so that the drilling apparatus 1 is locked firmly against the glass sheet. The repercussion valve b hereby maintains the underpressure in the suction channel 25. The pressure sensitive valve f is opened too so that the drill spindle 3 is in its withdrawn (in fig. 1 at the far right) position. Finally the three way valve e is in such a position that the first chamber section 14 is connected with the vacuum limiter c. When the underpressure in the suction channel 25 and the conduit 34 exceeds a set limit the vacuum limiter c will open and the first chamber section 14 and the cavity 4 of the drill spindle will be evacuated by the vacuum jet pump 18.

When the pressure sensitive valve f is closed now, in the third chamber section 33 an overpressure will be built up through the bearing slit h at the second bearing 32 so that the drill spindle 3 will move axially (in fig. 1 to the left). The maximum pressure in the third chamber section 33 is limited by the pressure limiter d that is positioned in the conduit 34.

During the drilling operation any drilling waste will be sucked away through the hollow drill 6 via the cavity of the drill spindle. Via this way also a part of the lubricating and/or cooling fluid will be removed.

When the hole has been wholly formed the pressure sensitive valve f will open due to the sudden pressure fall in the third chamber section 33 and the drill spindle 3 will be moved back towards its starting position. The velocity with which this occurs depends on the setting of the passage control g. During this backward axial movement any parts of the glass portion projecting out of the radial limits of the hollow drill 6 will be moved out of the drilled hole.

Next the vacuum disrupter 1 will be opened that long until the drilling apparatus 1 can be taken away from the glass sheet.

Finally the three way valve e can be set in its second position so that the first chamber section 14 is connected with the pressurized second chamber section 26. As a result the glass portion will be pressed out of the hollow drill 6 whereafter the drilling apparatus 1 is ready again for a following drilling operation.

The invention is not limited to the embodiment described above but can be varied widely within the scope of the invention.

0240093

CLAIMS

1. Drilling apparatus for drilling holes in glass sheets, with a housing and a drill spindle being journalled in that housing for an axial to and fro movement, said spindle at least at its free end being hollow and having an internal underpressure during the drilling operation and at its free end being connectable with a hollow drill of which the internal cavity is connected with the internal cavity of the drill spindle and that is lubricated and/or cooled by a fluid being supplied to the drilling apparatus under an overpressure, c h a r a c t e r i z e d  in that the drill spindle is positioned in a chamber that is formed in the housing and that is open at one side and that near to its free end is supported by a first bearing having good gas and fluid sealing properties wherein, on some distance of its free end, a sealing element is positioned between its contour wall and the internal wall of the chamber forming a first chamber section that is limited by the first bearing and the sealing element and that the drilling apparatus is provided with means for radially driving the drill spindle by means of the supplied fluid.

2. Drilling apparatus according to claim 1, c h a r a c t e r i z e d  in that the means for radially driving the drill spindle comprise a paddle wheel that in a second chamber section at the side of the sealing element facing away from the opening of the chamber is rotationally fixed on the drill spindle and a spray-nozzle that is positioned in the wall of the chamber and that cooperates with the paddle wheel and that is connected with a supply conduit of the pressurized fluid wherein the second chamber section comprises at least one discharge channel leading to a vacuum jet pump, that is positioned in the supply conduit of the fluid.

3. Drilling apparatus according to claim 2, c h a r a c t e r i z e d  in that the paddle wheel is axially not slidably mounted in the drill spindle and has such a width that during the to and fro movement of the drill spindle the spray-nozzle is always positioned between the forward and backward limiting plane of the paddle wheel.

4. Drilling apparatus according to claim 2 or 3, c h a r a c t e r i z e d   in that the drill spindle is axially movable to and fro by the supplied fluid.

5. Drilling apparatus according to claim 4, c h a r a c t e r i z e d   in that at that side of the paddle wheel facing away from the opening of the chamber the drill spindle is supported by a second bearing that is penetratable by the fluid supplied by the spray-nozzle, wherein the third chamber section limited by the second bearing and the backside of the chamber can be connected with the suction side of the vacuum jet pump by a conduit.

6. Drilling apparatus according to claim 5, c h a r a c t e r i z e d   in that a pressure sensitive valve is provided in the conduit that debouches in the third chamber section, said valve being closed during the drilling operation and being opened after completing the drilling operation, wherein also a pressure limiter and a passage controll are provided in this conduit.

7. Drilling apparatus according to one of the claims 4-6, c h a r a c t e r i z e d   in that the drilling spindle is provided with at least one abutment means that for limiting the axial drill spindle movement cooperates with other abutment means.

8. Drilling apparatus according to claim 7, c h a r a c t e r i z e d   in that the drill spindle is provided with two abutment means that are positioned at both sides of the paddle wheel and that cooperate with the sealing element or second bearing, respectively, that act as other abutment means.

9. Drilling apparatus according to one of the claims 5-8, c h a r a c t e r i z e d   in that the part of the housing enclosing the third chamber section is manufactured of a transparent material.

fig.1

fig.2

fig.3

fig.4

fig.5

0240093